# EUROPÄISCHE PATENTSCHRIFT

(11) **EP 3 523 549 B1**
(45) Veröffentlichungstag und Bekanntmachung des Hinweises auf die Patenterteilung: **29.07.2020**
(21) Anmeldenummer: 17771981.2
(22) Anmeldetag: 12.09.2017
(51) Int. Cl.: F16D 48/02

(54) **VERFAHREN ZUR ANSTEUERUNG EINER HYDRAULISCHEN GETRIEBEAKTORANORDNUNG**
METHOD FOR ACTUATING A HYDRAULIC TRANSMISSION ACTUATOR ASSEMBLY
PROCÉDÉ DE COMMANDE D'UN ENSEMBLE ACTIONNEUR HYDRAULIQUE DE BOÎTE DE VITESSES

(30) Priorität: 05.10.2016 DE 102016219243
(43) Veröffentlichungstag der Anmeldung: 14.08.2019
(73) Patentinhaber: Schaeffler Technologies AG & Co. KG, 91074 Herzogenaurach (DE)
(72) Erfinder: SCHAUER, Andre, 77815 Bühl (DE); KRUG, Matthias, 56218 Mühlheim-Kärlich (DE)
(86) Internationale Anmeldenummer: PCT/DE2017/100768
(87) Internationale Veröffentlichungsnummer: WO 2018/065001

(56) Entgegenhaltungen:
- WO-A1-2004/029472
- WO-A1-2016/146118
- DE-A1-102014 213 620
- DE-A1-102014 218 884

## Beschreibung

Die Erfindung betrifft ein Verfahren zur Ansteuerung einer hydraulischen Getriebeaktoranordnung, bei welcher eine Volumenstromquelle über eine, mit einer Hydraulikflüssigkeit gefüllten Druckleitung mit mindestens einem Hydraulikzylinder verbunden ist, wobei ein Volumen der Hydraulikflüssigkeit über die Volumenstromquelle geregelt wird.

Hydraulische Aktoranordnungen werden insbesondere in Kraftfahrzeugen vielfältig eingesetzt. So können sie zum Betätigen einer Reibungskupplung oder zum automatischen Einlegen von Gängen in automatisierten Getrieben eingesetzt werden. Solche Hydraulikanordnungen weisen dabei bestimmte Betriebspunkte in Form einer Position auf, an denen ein Gang eingelegt wird oder eine Kupplung beginnt, ein erstes Drehmoment zu übertragen.

Aus der DE 10 2012 021 211 A1 ist ein Verfahren zur Ermittlung eines Einstellparameters für eine hydraulische Aktoranordnung in einem Kraftfahrzeugantriebsstrang bekannt. Diese hydraulische Aktoranordnung umfasst eine Pumpe und einen Hydraulikzylinder, wobei ein Druckanschluss der Pumpe mit einem Anschluss des Hydraulikzylinders verbunden ist. Der Einstellparameter stellt eine Funktion des Volumens des Fluids dar, das von der Pumpe zur Einstellung eines bestimmten Betriebspunktes der Anordnung zu fördern ist. Das Fluidvolumen wird über der Zeit bis zu einem Abschlussbetriebszustand der Aktoranordnung integriert, bei dem der Ansteuerwert der Pumpe kleiner/gleich einem Betriebspunktansteuerwert ist.

Aus der DE 10 2014 213020 A1 ist ein Verfahren zur Ansteuerung einer hydraulischen Getriebeaktorartordnung bekannt, beider eine Volumenstromquelle über einen mit einer Hydraulikflüssigkeit gefüllten Druckleitung mit mindestens einem Hydraulikzylinder verbunden ist, wobei ein Volumen der Hydraulikflüssigkeit über die Volumenstromquelle geregelt wird, derart, dass eine Regelung als kombinierte Weg- und Winkel-Regelung der Volumenstromquelle ausgeführt wird, wobei die Weg-Regelung und die Winkel- Regelung ineinander überblendet werden.

Es ist bekannt, dass zur Ermittlung des Betriebspunktes ab Betätigungsbeginn der hydraulischen Aktoranordnung von der Volumenstromquelle zurückgelegte Winkelinkremente gezählt werden. Ebenfalls bekannt ist, das zur Einstellung des Betriebspunktes notwendige Volumen der Hydraulikflüssigkeit aus einer rotatorischen Lage einer Volumenstromquelle abzuleiten.

Der Erfindung liegt die Aufgabe zugrunde, ein Verfahren zur Ansteuerung einer Getriebeaktoranordnung anzugeben, bei welchem die Dynamik der hydraulischen Getriebeaktoranordnung erhöht und somit der Betrieb der Pumpenaktoren in optimierten Betriebspunkten erfolgt.

Erfindungsgemäß ist die Aufgabe dadurch gelöst, dass eine Regelung als kombinierte Weg- und Winkel-Regelung der Volumenstromquelle ausgeführt wird, wobei die Weg-Regelung und die Winkel-Regelung ineinander überblendet werden. Dabei bestimmt die Weg-Regelung eine Auswahl einer Schaltgasse eines Getriebes und die Winkel-Regelung erlaubt ein Eingreifen in die Schaltgasse, wobei von Beginn einer Umschaltung des Ventils von der Wählstellung in die Schaltstellung, die Hydraulikflüssigkeit zu fließen beginnt. Dadurch wird ein vorgegebener Zeitraum (Totzeit, in welcher der Getriebeaktor nicht arbeitet), wie er aus dem Stand der Technik bekannt ist, welcher zwischen der Wählstellung und der Schaltstellung des Ventils ungenutzt verstreicht, genutzt, um während der Umschaltung des Ventils von der Wählstellung in die Schaltstellung gleitend überzugehen. Dies hat weiterhin den Vorteil, dass die Dynamik der Ansteuerung der hydraulischen Getriebeaktoren verbessert wird und eine Optimierung hinsichtlich des Betriebspunktes der Getriebeaktoren, die vorzugsweise als Pumpenaktoren ausgebildet sind, erfolgt.

Vorteilhafterweise wird zur Überblendung der Weg-Regelung und der Winkel-Regelung ein hydraulisches Überdeckungselement verwendet. Ein solches Überdeckungselement umfasst eine Software, welche ein hydraulisches Element steuert, bei welchem durch den Fluss der Hydraulikflüssigkeit zu vorgegebenen Zeitpunkten die Überdeckung der Regelungen realisiert wird.

In einer Ausführungsform wird als Überdeckungselement mindestens ein Ventil mit einer negativen Überdeckung verwendet. Dabei ist die negative Überdeckung eine Ventileigenschaft, die bei der Umschaltung des Ventils von der Wählstellung in die Schaltstellung einen Durchlauf der Hydraulikflüssigkeit erlaubt.

In einer Variante erfolgt nach Erkennen einer offenen Kupplung die Umschaltung des Ventils, wobei eine Schaltgassenposition eingeregelt wird und anschließend das Ventil bei gleichzeitiger Überblendung der Weg- und Winkel-Regelung aktiviert wird. Somit wird die Totzeit zwischen Wähl- und Schaltstellung durch Betätigung des Getriebeaktors verkürzt, was eine höhere Dynamik der Getriebeaktoranordnung ermöglicht und somit gleichzeitig eine Optimierung des Betriebspunktes der zu schaltenden Anordnung erlaubt.

In einer Weiterbildung wird nach einem vollständigen Umschalten des Ventils die Weg-Regelung deaktiviert. Auf Grund der Wirksamkeit der im Getriebeaktor vorhandenen Rückstellfedern in der Wähl- und Schaltbewegung ist kein Verharren in einer Position möglich, wenn die Weg-Regelung nicht aktiv ist. Sobald in die Schaltbewegung übergegangen wird, wird in eine Kulisse verfahren, welche das Abfallen der Wählbewegung auf Grund der Rückstellfeder verhindert.

In einer Ausgestaltung wird während des Überblendens der Weg-Regelung und der Winkel-Regelung ein Regelfehler aus einer Gewichtung der jeweiligen Regelfehler aus Weg- und Winkel-Regelung und anschließender Summation ermittelt. Diese Gewichtung und Summation der Regelfehler ist notwendig, da auf Grund der Rückstellfeder in der Wählbewegung ein Abfall der Wählposition stattfinden würde. In Kombination mit der negativen Überdeckung gewährleistet die Regelung, dass die Wählposition erhalten bleibt und dennoch die Schaltbewegung schon initiiert wird.

Eine Weiterbildung der Erfindung betrifft eine hydraulische Getriebeaktoranordnung, vorzugsweise für einen Fahrzeugantriebsstrang, umfassend eine von einem Elektromotor angetriebene Volumenstromquelle, welche über eine Druckleitung mit mindestens einem Hydraulikzylinder verbunden ist. Die Dynamik des hydraulischen Getriebeaktors wird erhöht, indem zwischen der Volumenstromquelle und dem Hydraulikzylinder ein Regelungsüberdeckungselement angeordnet ist. Dabei ist das Regelungsüberdeckungselement als Ventil mit negativer Überdeckung ausgebildet ist, welches mit einem ersten Hydraulikteilzylinder zum Wählen einer Schaltgasse und einem zweiten Hydraulikteilzylinder zur Einstellung eines Ganges in die ausgewählte Schaltgasse eines Getriebes verbunden ist.

Die Erfindung lässt zahlreiche Ausführungsformen zu. Eine davon soll anhand der in der Zeichnung dargestellten Figuren näher erläutert werden.

Es zeigen:
- Fig. 1: ein Ausführungsbeispiel einer erfindungsgemäßen hydraulischen Getriebeaktoranordnung,
- Fig. 2: ein Ausführungsbeispiel einer Regelungsstrategie der Getriebeaktoranordnung gemäß Fig. 1,
- Fig. 3: eine Ausführungsbeispiel des erfindungsgemäßen Ansteuerverfahrens,
- Fig. 4: ein Ansteuerverfahren nach dem Stand der Technik.

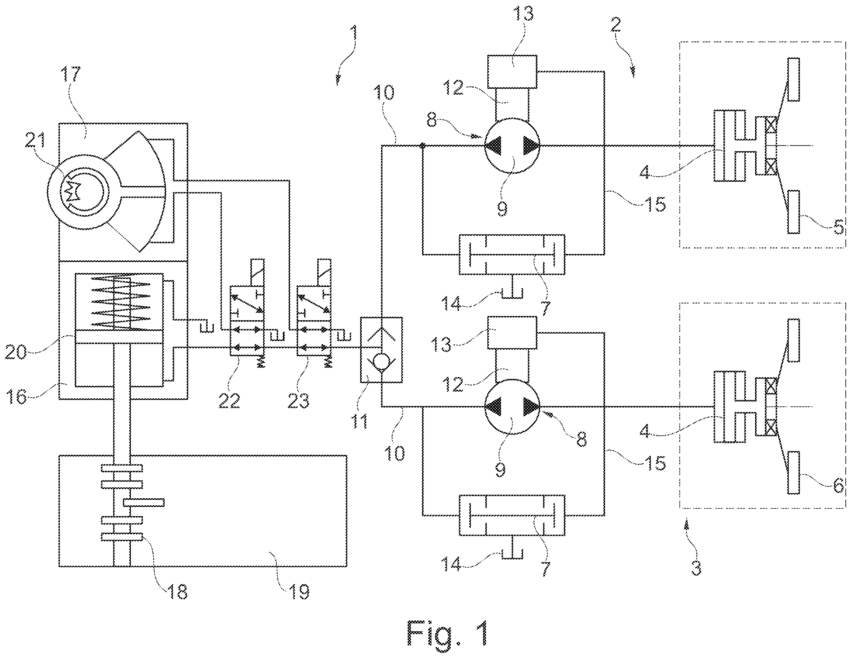

Fig. 1 zeigt ein Ausführungsbeispiel einer erfindungsgemäßen hydraulischen Getriebeaktoranordnung, bei welchem eine Schaltaktorik 1 eines Doppelkupplungsgetriebes dargestellt ist. Bei diesem Doppelkupplungsgetriebe sind zwei Getriebestränge 2, 3 vorhanden, die je einen Kupplungshydraulikzylinder 4 aufweisen, der eine Teilkupplung 5 bzw. 6 betätigt. Der jeweilige Kupplungshydraulikzylinder 4 der Teilkupplung 5, 6 wird über einen Pumpenaktor angetrieben und sind mit einem Zweidruckventil 7 gekoppelt ist.

Der Pumpenaktor 8 weist eine Pumpe 9 auf, die als Volumenstromquelle dient und über eine Hochdruckleitung 10 mit einem Zwei-Wegeventil 11 verbunden ist. Die Pumpe 9 wird von einem Elektromotor 12 angetrieben, welcher wiederum von einem Steuergerät 13 angesteuert wird. Über die Pumpe 9 wird aus einem Hydraulikreservoir 14 über eine Niederdruckleitung 15 Hydraulikflüssigkeit durch die Pumpe 9 angesaugt und über die Hochdruckleitung 10 dem Zwei-Wegeventil 11 zugeführt.

Die beiden Getriebestränge 5, 6 sind über das Zwei-Wegeventil 11 mit zwei Hydraulikteilzylindern 16, 17 für eine Getriebeschaltung verbunden. Das Zweiwegeventil 11 führt dabei an einen ersten Hydraulikteilzylinder 16, welcher für den Wählvorgang einer Schaltgasse 18 in einem Getriebe 19 zuständig ist, weshalb der in dem ersten Hydraulikteilzylinder 16 angeordnete Kolben 20 in Abhängigkeit von dem Volumen der Hydraulikflüssigkeit eine translatorische Bewegung ausführt. Daran schließt sich der eigentliche Schaltvorgang an, der ein Einführen eines Schaltfingers in die ausgewählte Schaltgasse 18 ermöglicht, was durch den zweiten Hydraulikteilzylinder 17 realisiert wird, der einen eine Schwenkbewegung ausführenden Kolben 21 aufweist.

Zwischen dem ersten und dem zweiten Hydraulikteilzylinder 16, 17 sind zwei Mehrwegeventile 22, 23 angeordnet, die drei Stellungen einnehmen können. Die Mehrwegeventile 22, 23 können je nach erforderlicher Ansteuerung der erforderlichen Hydraulikteilzylinder 16, 17 entweder in Richtung des Uhrzeigersinnes oder entgegen diesem angesteuert werden. In der in Fig. 1 dargestellten Stellung ist der obere Pumpenaktor 8 mit dem Kolben 16 verbunden, was der Wählstellung entspricht. Dies ist die neutrale Stellung der Mehrwegeventile 22, 23 wird keine der beiden Hydraulikteilzylinder 16, 17 mit Hydraulikflüssigkeit versorgt.

Die Mehrwegeventile 22, 23 sind über das Zwei-Wegeventil 11 mit der Hochdruckleitung 10 verbunden, die die Hydraulikteilzylinder 16, 17 mit jeweils einem Pumpenaktor 8 der beiden Teilgetriebestränge 2, 3 verbindet.

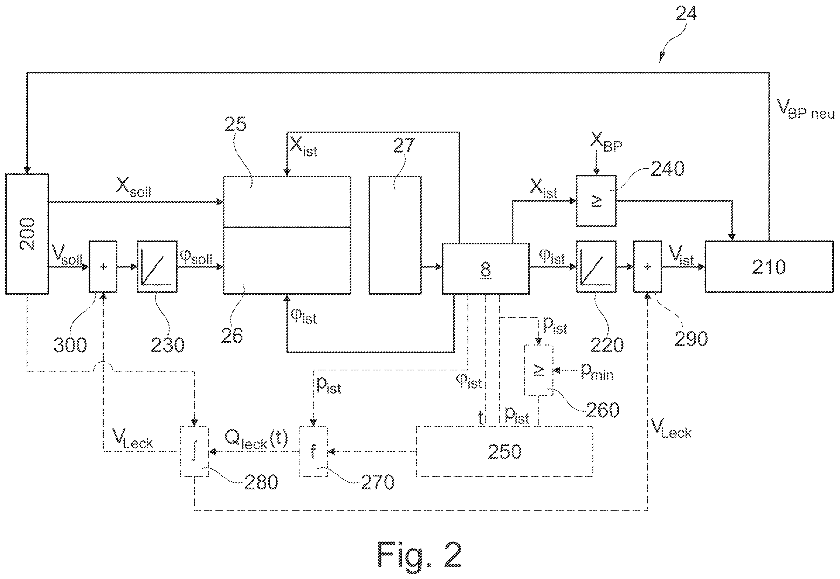

Die in Fig. 1 dargestellte hydraulische Getriebeaktoranordnung wird von einem Regelkreis 24 betätigt, wie er in Fig. 2 dargestellt und im Steuergerät 13 ausgebildet ist. Eine Umsetzung erfolgt mit einer kombinierten Weg-/Winkel-Regelung, bei der der Regeltyp zwischen Druck p und Drehwinkel ϕ der Pumpe 9 umgeschaltet werden kann. Anstelle des Drucksignales p kann auch ein beliebiges Signal X verwendet werden, beispielsweise ein Strom des Elektromotors 12, welcher annähernd proportional zum Druck p ist. Aus diesem Grund soll im Weiteren die Regelstrecke des Signals X betrachtet werden. Dabei wird die Regelung des Signales X in Arbeitsbereichen mit großen Signalgradienten eingesetzt. Die Pumpenwinkelregelung erfolgt in Arbeitsbereichen mit kleinen Druckgradienten. Das erfolgt in Abhängigkeit davon, welcher Druck p durch die Hydraulikflüssigkeit in der Getriebeaktoranordnung eingestellt wird.

Die Umschaltung zwischen der Wegregelung 25 des Signales X und der Winkelregelung 26 des Winkels ϕ erfolgt bei einer Betätigung der geöffneten Teilkupplung 5 bzw. 6 über eine Druckgrenze. Die Auswahl des jeweiligen Regelverfahrens erfolgt über eine Steuerung 200. Die Steuerung 200 gibt ein Sollsignal X_{SOLL} und/oder ein Sollvolumen V_{SOLL} vor. Die Wegregelung 25 des Signales X erfolgt dabei traditionell unter Berücksichtigung der Regeldifferenzen zwischen dem Signalsollwert X_{SOLL} und dem Signalistwert X_{IST}, der von dem Pumpenaktor 8 abgeleitet wird. Je nach der von der Steuerung im Block 200 ausgegebenen Auswahl wird das entsprechende Ausgangssignal der Signalregelung oder der Winkelregelung 26 an den Pumpenaktor 8 weitergegeben.

Mithilfe von dem an der Pumpe 9 ermittelten Drehwinkel ϕ_{IST} und des Istsignals X_{IST} wird ein Volumen V_{BPneu} zur Einstellung eines neuen Betriebspunktes adaptiert (Block 210). Zu diesem Zweck wird vorher der Istdrehwinkel ϕ_{IST} in ein Istvolumen V_{IST} umgerechnet (Block 220). Dieses neue Volumen V_{SPneu} der Hydraulikflüssigkeit wird der Steuerung im Block 200 zugeführt, welche aus dem neuen Volumen V_{BPneu}, das einem bestimmten Betriebspunkt entspricht, den Sollwert V_{SOLL} des Volumens V ermittelt. Das Sollvolumen V_{SOLL} wird im Block 230 über den Pumpenkennwert: Volumen pro Winkel in einem Sollwinkel ϕ_{SOLL} umgerechnet. Die Differenz aus diesem tatsächlich gemessenen Drehwinkel ϕ_{IST} mit dem neu errechneten Sollwinkel ϕ_{SOLL} bildet den Eingang der Winkelregelung 26. Aus diesem Sollwinkel ϕ_{SOLL} und dem Istdrehwinkel ϕ_{IST} wird die Differenz bestimmt, die der Winkelregelung zugrunde gelegt wird und die den Istdrehwinkel ϕ_{IST} auf den Solldrehwinkel ϕ_{SOLL} regelt. Der Betriebspunkt wird über das Signal X_{BP} definiert (Block 240). Ist dieses Signal X_{BP} erreicht, so wird das Istvolumen V_{IST}, welches aus dem Istdrehwinkel ϕ_{IST} abgeleitet wurde, zu diesem Zeitpunkt als neues Volumen V_{BPneu} des Betriebspunktes definiert, und an die Steuerung im Block 200 ausgegeben.

Die Winkelregelung 26 kann dabei optional eine kalkulierte Leckage V_{Leck} berücksichtigen, um die Ergebnisse der Winkelregelung 26 zu verbessern. Zur Adaption der Leckage V_{Leck} werden ebenfalls der Istdrehwinkel ϕ_{IST} und der Istdruck p_{IST} verwendet. Dabei wird der Istdruck p_{IST} zur Adaption der Leckage (Block 250) nur dann genutzt, wenn der Istdruck p_{IST} größer/gleich einem vorgegebenen Schwellwert minus pₘᵢₙ (Block 260) ist. Die aus dem Istdrehwinkel ϕ_{IST} und dem Istdruck p_{IST} im Block 270 berechnete Leckagerate Q_{leck}(t) wird im Block 280 integriert. Das Ergebnis dieser Integration über der Zeit stellt das Leckagevolumen V_{Leck} dar, welches sowohl bei der Bestimmung des Volumenistwertes V_{IST} im Block 290 als auch bei der Bestimmung des Volumensollwertes V_{SOLL} (Block 300) berücksichtigt wird. Der Pfad der Leckagevorsteuerung ist dabei in Fig. 2 gestrichelt dargestellt.

Das erfindungsgemäße Ansteuerverfahren greift bei der Umschaltung des Wählvorganges in den Schaltvorgang der Getriebeaktoranordnung und soll am Beispiel des Einlegens eines Ganges mit der hydraulischen Getriebeaktoranordnung gemäß Fig. 1 aus einer Betätigung einer Teilkupplung 5 oder 6 heraus erläutert werden. Zunächst wird die Teilkupplung 5, 6 geöffnet, was durch einen nicht weiter dargestellten Sensor detektiert wird. Ist die entsprechende Teilkupplung 5 bzw. 6 geöffnet, schaltet das Zwei-Wegeventil 11, so dass der Hydraulikteilzylinder 16, der für die Auswahl der Schaltgasse zuständig ist, in Betrieb gesetzt wird. Die Wegregelung 25 wird zur Einregelung der Schaltgassensollposition gestartet. Anschließend werden die Mehrwegeventile 22, 23 aktiviert. Bei diesen Mehrwegeventilen 22, 23 handelt es sich um Ventile mit negativer Überdeckung, was bedeutet, dass ab dem Zeitpunkt, wo das Mehrwegeventil 22, 23 aktiviert wird, in den Hydraulikteilzylinder 17, der für das Schalten zuständig ist, einfließt. Dadurch erfolgt ein Überblenden der Wegregelung 25 mit der Winkelregelung 26, was in Fig. 2 durch den Block 27 gekennzeichnet ist.

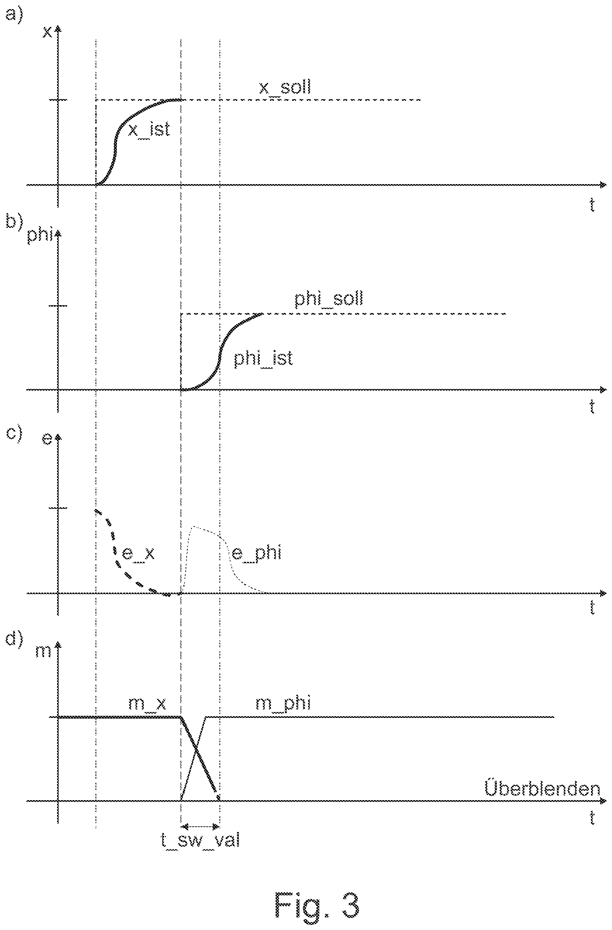

Die Überlappung der Regelungen 25, 26 ist in Fig. 3 dargestellt. Dabei zeigt Fig. 3a die Position des Weges des Kolbens 20 des Hydraulikteilzylinders 16 über der Zeit, während in Fig. 3b die Position des Winkels des Kolbens 21 des Hydraulikteilzylinders 17 über der Zeit dargestellt ist. In Fig. 3c sind Regelfehler über der Zeit dargestellt, wobei e_x den Wegregelfehler und e_phi den Winkelregelfehler darstellen. Fig. 3d zeigt die Multiplikatoren m_x; m_phi der Regelfehler e_x; e_phi aus Weg-Regelung 25 und Winkel-Regelung 26.

Bei dem Ansteuerverfahren für "Wählen/Schalten" wird zunächst ein Sollweg X_{SOLL} für die Schaltgasse vorgegeben und die Weg-Regelung 25 aktiviert. Ab dem Zeitpunkt, wo die Mehrwegeventile 22, 23 aktiviert werden, startet gleichzeitig die Winkel-Regelung 26, was aus Fig. 3d ersichtlich ist, wodurch das Überblenden von Weg- Regelung 25 und Winkelregelung 26 erfolgt.

Wie aus Fig. 3c hervorgeht, läuft die Regelung nach der Aktivierung der Mehrwegeventile 22, 23 weiter und die stationäre Genauigkeit des Schaltwinkels phi wird schneller erreicht als im Verfahren nach dem Stand der Technik.

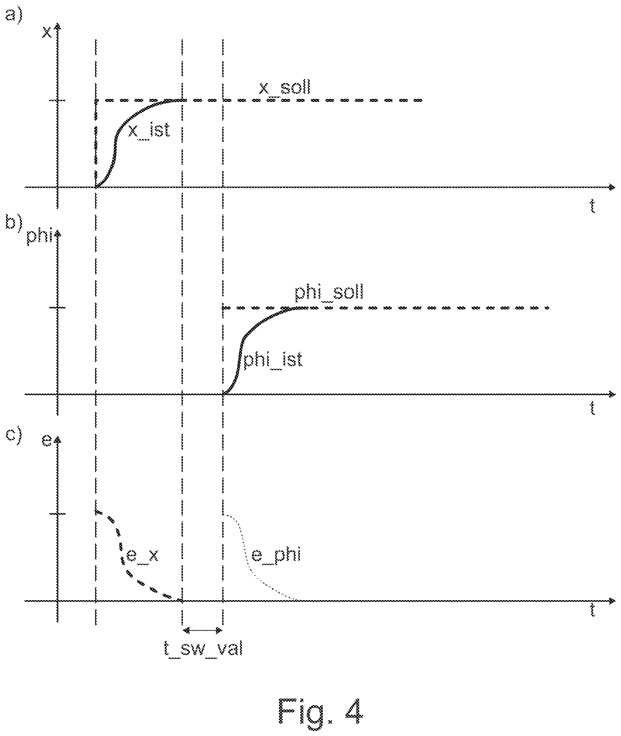

Beim Stand der Technik wird die Weg-Regelung 25 gestartet und, wenn die stationäre Genauigkeit des Weges x erreicht ist, das Mehrwegeventil 22, 23 aktiviert, wobei das Mehrwegeventil 22, 23 keinerlei negative Überdeckung aufweist. Es wird eine Zeit t_sw_val abgewartet, bis der Wählvorgang abgeschlossen ist. Anschließend wird ein Soll-Winkel ϕ_{SOLL} vorgegeben und die Winkel-Regelung 26 aktiviert. Das bedeutet, dass im Zeitraum von t_sw_val kein Regelfehler ausgegeben wird und somit der Pumpenaktor 8 stillsteht (Fig. 4d).

Da bei der vorgeschlagenen Lösung gemäß Fig. 3d ein Regelfehler auch während des Zeitraumes t_sw_val ausgegeben wird, ist zu diesem Zeitpunkt auch die Winkelregelung 26 des Pumpenaktor 8 aktiv. Dadurch erfolgt eine Überlappung von Weg-Regelung 25 und Winkel-Regelung 26, was die Dynamik des Ansteuervorganges der hydraulischen Getriebeaktoranordnung verbessert. Somit wird der Hydraulikteilzylinder 17, der für den eigentlichen Schaltvorgang zuständig ist, bereits gestartet, während das Mehrwegeventil 22, 23 sich noch im Umschaltzustand befindet. Nach einem vollständigen Umschalten des Mehrwegeventils 22, 23 wird die Wegregelung 15 deaktiviert und eine Synchronisation gestartet.

Mittels des erfindungsgemäßen Verfahrens läuft die Regelung 25 des Weges nach der Aktivierung des Ventils 22, 23 weiter und die stationäre Genauigkeit des Schaltwinkels wird schneller erreicht als im Ansteuerverfahren nach dem Stand der Technik.

Die hier dargestellte Anordnung für eine hydraulische Getriebeaktoranordnung mit Ventilsteuerung kann auch zur Ansteuerung von Schaltschienen genutzt werden. Die Regelstrategien, die überlagert werden, sind hier nur beispielhaft erläutert. Die Ausprägung der einzelnen Regelstrategie soll allgemein bleiben und ist auch für mehr als zwei Regelungen kombinierbar. Ebenfalls lässt sich das Überblenden der Regelung nicht nur linear gestalten, sondern mit einer beliebigen Trajektorie umsetzen.

### Bezugszeichenliste

- 1: Schaltaktorik
- 2: Getriebestrang
- 3: Getriebestrang
- 4: Kupplungshydraulikzylinder
- 5: Teilkupplung
- 6: Teilkupplung
- 7: Zweidruckventil
- 8: Pumpenaktor
- 9: Pumpe
- 10: Hochdruckleitung
- 11: Zwei-Wegeventil
- 12: Elektromotor
- 13: Steuergerät
- 14: Hydraulikreservoir
- 15: Niederdruckleitung
- 16: Hydraulikteilzylinder
- 17: Hydraulikteilzylinder
- 18: Schaltgasse
- 19: Getriebe
- 20: Kolben
- 21: Kolben
- 22: Mehrwegeventil
- 23: Mehrwegeventil
- 24: Regelkreis
- 25: Wegregelung
- 26: Winkelregelung
- 27: Überdeckungselement

## Patentansprüche

1. Verfahren zur Ansteuerung einer hydraulischen Getriebeaktoranordnung, bei welcher eine Volumenstromquelle (9) über einen mit einer Hydraulikflüssigkeit gefüllten Druckleitung (6) mit mindestens einem Hydraulikzylinder (16, 17) verbunden ist, wobei ein Volumen der Hydraulikflüssigkeit über die Volumenstromquelle (9) geregelt wird, **dadurch gekennzeichnet, dass** eine Regelung als kombinierte Weg- und Winkel-Regelung (25, 26) der Volumenstromquelle (9) ausgeführt wird, wobei die Weg-Regelung (25) und die Winkel-Regelung (26) ineinander überblendet werden, **dadurch gekennzeichnet, dass** die Weg-Regelung (25) eine Auswahl einer Schaltgasse (18) eines Getriebes (19) bestimmt und die Winkel-Regelung (26) ein Eingreifen in die Schaltgasse (18) erlaubt, wobei von Beginn einer Umschaltung des Ventils (22, 23) von der Wählstellung in die Schaltstellung an, die Hydraulikflüssigkeit zu fließen beginnt..

2. Verfahren nach Anspruch 1, **dadurch gekennzeichnet, dass** zur Überblendung der Weg-Regelung (25) und der Winkel-Regelung (26) ein Regelungsüberdeckungselement (27) verwendet wird.

3. Verfahren nach Anspruch 1 oder 2, **dadurch gekennzeichnet, dass** als Überdeckungselement mindestens ein Ventil (22, 23) mit einer negativen Überdeckung verwendet wird.

4. Verfahren nach mindestens einem der vorhergehenden Ansprüche, **dadurch gekennzeichnet, dass** nach dem Erkennen einer offenen Kupplung (4) die Umschaltung des Ventils (22, 23) erfolgt, wobei eine Schaltgassenposition eingeregelt wird und anschließend das Ventil (22, 25) bei gleichzeitiger Überblendung der Weg- und Winkel-Regelung (25, 26) aktiviert wird.

5. Verfahren nach Anspruch 4, **dadurch gekennzeichnet, dass** nach einem vollständigen Umschalten des Ventils (22, 23) die Weg-Regelung (26) deaktiviert wird.

6. Verfahren nach mindestens einem der vorhergehenden Ansprüche, **dadurch gekennzeichnet, dass** während des Überblendens der Weg-Regelung (25) und der Winkel-Regelung (26) ein Regelfehler (m_x, m_phi) aus einer Gewichtung der jeweiligen Regelfehler (e_x, e_phi) aus Weg- und Winkel-Regelung (25, 26) und anschließender Summation ermittelt wird.

7. Hydraulische Getriebeaktoranordnung, vorzugsweise für einen Fahrzeugantriebsstrang, deren Ansteuerung nach einem Verfahren nach einem der vorangehenden Ansprüchen durchgeführt wird, umfassend eine von einem Elektromotor (12) angetriebene Volumenstromquelle (9), welche über eine Druckleitung (6) mit mindestens einem Hydraulikzylinder (16, 17) verbunden ist, wobei zwischen der Volumenstromquelle (8) und dem Hydraulikzylinder (16, 17) ein Regelungsüberdeckungselement (27) angeordnet ist, **dadurch gekennzeichnet, dass** das Regelungsüberdeckungselement (27) als Ventil (22, 23) mit negativer Überdeckung ausgebildet ist, welches mit einem ersten Hydraulikteilzylinder (16) zum Wählen einer Schaltgasse (18) und einem zweiten Hydraulikteilzylinder (17) zur Einstellung eines Ganges in die ausgewählte Schaltgasse (18) eines Getriebes (19) verbunden ist.

## Claims

1. A method for actuating a hydraulic transmission actuator assembly, in which a volume flow source (9) is connected to at least one hydraulic cylinder (16, 17) via a pressure line (6) filled with a hydraulic fluid, a volume of the hydraulic fluid being controlled via the volume flow source (9), **characterised in that** control is carried out as a combined travel and angle control (25, 26) of the volume flow source (9), the travel control (25) and the angle control (26) being superimposed, **characterised in that** the travel control (25) determines a selection of a shift gate (18) of a transmission (19) and the angle control (26) allows engagement in the shift gate (18), wherein the hydraulic fluid begins to flow when the valve (22, 23) begins to switch over from the selected position to the shifting position.

2. The method according to Claim 1, **characterised in that** a control overlapping element (27) is used to superimpose the travel control (25) and the angle control (26).

3. The method according to claim 1 or 2, **characterised in that** at least one valve (22, 23) with a negative overlap is used as the overlap element.

4. The method according to at least one of the preceding claims, **characterised in that** after the detection of an open clutch (4), the valve (22, 23) is switched over, wherein a shift gate position is adjusted and then the valve (22, 25) is activated with simultaneous superimposing of the travel and angle control (25, 26).

5. The method according to claim 4, **characterised in that** after a complete switch-over of the valve (22, 23) the travel control (26) is deactivated.

6. The method according to at least one of the preceding claims, **characterised in that** a control error (m_x, m_phi) is determined from a weighting of the respective control errors (e_x, e_phi) from the travel and angle control (25, 26) during the superimposing of the travel control (25) and the angle control (26) and the subsequent summation.

7. A hydraulic transmission actuator assembly, preferably for a vehicle drive train, the control of which is carried out according to a method according to one of the preceding claims, comprising a volume flow source (9) driven by an electric motor (12), which is connected via a pressure line (6) to at least one hydraulic cylinder (16, 17), a control overlap element (27) being arranged between the volume flow source (8) and the hydraulic cylinder (16, 17), **characterised in that** the control overlap element (27) is designed as a valve (22, 23) with a negative overlap, which is connected to a first hydraulic part cylinder (16) for selecting a shift gate (18) and a second hydraulic part cylinder (17) for setting a gear in the selected shift gate (18) of a transmission (19).

## Revendications

1. Procédé de commande d'un ensemble actionneur hydraulique de boîtes de vitesses, dans lequel une source de débit volumique (9) est connectée à au moins un vérin hydraulique (16, 17) par l'intermédiaire d'une conduite de pression (6) remplie d'un fluide hydraulique, un volume du fluide hydraulique étant régulé par l'intermédiaire de la source de débit volumique (9), **caractérisé en ce que** la régulation est exécutée en tant que régulation combinée de voie et d'angle (25, 26) de la source de débit volumique (9), la régulation de voie (25) et la régulation d'angle (26) étant superposées l'une à l'autre, **caractérisé en ce que** la régulation de voie (25) détermine une sélection d'un couloir de changement de vitesse (18) d'une boîte de vitesses (19) et la régulation d'angle (26) permet une intervention dans le couloir de changement de vitesse (18), le fluide hydraulique commençant à couler dès le début d'une commutation de la soupape (22, 23), de la position sélectionnée à la position de commutation.

2. Procédé selon la revendication 1, **caractérisé en ce qu'**un élément de chevauchement de régulation (27) est utilisé pour superposer la régulation de voie (25) et la régulation d'angle (26).

3. Procédé selon la revendication 1 ou 2, **caractérisé en ce qu'**au moins une soupape (22, 23) avec un chevauchement négatif est utilisée comme élément de chevauchement.

4. Procédé selon au moins une des revendications précédentes, **caractérisé en ce que**, après la détection d'un embrayage ouvert (4), la soupape (22, 23) est commutée, une position du couloir de changement de vitesse étant ajustée, puis la soupape (22, 25) est actionnée avec la superposition simultanée de la régulation de voie et d'angle (25, 26).

5. Procédé selon la revendication 4, **caractérisé en ce que**, après une commutation complète de la soupape (22, 23), la régulation de voie (26) est désactivée.

6. Procédé selon au moins une des revendications précédentes, **caractérisé en ce que**, pendant la superposition de la régulation de voie (25) et de la régulation d'angle (26), une erreur de régulation (m_x, m_phi) est déterminée à partir d'une pondération des erreurs de régulation respectives (e_x, e_phi) de la régulation de voie et d'angle (25, 26) et de la totalisation ultérieure.

7. Ensemble actionneur hydraulique de boîtes de vitesses, de préférence pour une boîte de vitesses de véhicule, dont la commande est effectuée selon un procédé selon l'une quelconque des revendications précédentes, comprenant une source de débit volumique (9) entraînée par un moteur électrique (12) et qui est connectée par l'intermédiaire d'une conduite de pression (6) à au moins un vérin hydraulique (16, 17), un élément de chevauchement de régulation (27) étant disposé entre la source de débit volumique (8) et le vérin hydraulique (16, 17), **caractérisé en ce que** l'élément de chevauchement de régulation (27) est conçu comme une soupape (22, 23) avec un chevauchement négatif, qui est connectée à un premier vérin hydraulique partiel (16) pour sélectionner un couloir de changement de vitesse (18) et à un second vérin hydraulique partiel (17) pour régler un engrenage dans le couloir de changement de vitesse (18) sélectionné d'une boîte de vitesses (19).
